# EUROPÄISCHE PATENTSCHRIFT

(11) **EP 1 076 022 B1**
(45) Veröffentlichungstag und Bekanntmachung des Hinweises auf die Patenterteilung: **06.10.2004**
(21) Anmeldenummer: 00110857.0
(22) Anmeldetag: 23.05.2000
(51) Int. Cl.: B65G 51/02, A24C 5/32

(54) **Förderleitung zum Fördern von Gegenständen mit Hilfe von Gas**
Conveyance duct for transporting articles using a gas
Conduit de transport pour le transport d'articles utilisant un gaz

(30) Priorität: 12.08.1999 DE 19937636
(43) Veröffentlichungstag der Anmeldung: 14.02.2001
(73) Patentinhaber: Hauni Maschinenbau AG, 21033 Hamburg (DE)
(72) Erfinder: Meins, Thomas, 22049 Hamburg (DE)
(74) Vertreter: Eisenführ, Speiser & Partner

(56) Entgegenhaltungen:
- EP-A- 0 330 531
- EP-A- 0 901 758
- DE-A- 2 165 782
- DE-A- 2 306 096
- US-A- 4 178 662
- US-A- 4 358 226

## Beschreibung

Die Erfindung betrifft eine Förderleitung zum Fördern von Gegenständen mit Hilfe von Gas, welches Gas durch eine erste Einblasstelle in die Förderleitung einblasbar ist, wobei die Förderleitung einen gekrümmten Rohrabschnitt aufweist, welcher im Bereich der Krümmung einen erweiterten Durchtrittsquerschnitt aufweist.

Pneumatische Förderleitungen sind aus dem Stand der Technik bekannt. Pneumatische Förderleitungen fördern Gegenstände, beispielsweise stabförmige Gegenstände wie Filterstäbe oder Zigarettenstäbe, mit Hilfe von in eine rohrförmige Förderleitung eingeblasenem Gas, beispielsweise Luft, welche Luft die Gegenstände durch die Förderleitung treibt.

Um bei einer pneumatischen Förderleitung die Gegenstände ausreichend schnell und vor allem mit einem ausreichend großen Wirkungsgrad mit Hilfe von Luft durch die Rohrleitungen treiben zu können, muss der Innendurchmesser der Rohrleitungen in etwa dem Außendurchmesser der Gegenstände entsprechen. Denn nur dann ist gewährleistet, dass zwischen dem Gegenstand und dem eigentlichen Förderrohr nicht zu viel Luft ungenutzt hindurchgetrieben wird.

Besonders deutlich wird diese Notwendigkeit der pneumatischen Förderung insbesondere dann, wenn es sich um längliche oder stabförmige Gegenstände handelt, die nicht elastisch sind. Bei solchen Gegenständen, wie beispielsweise bei Filterstäben oder Zigarettenstäben, ist es dann, wenn die Förderleitung eine Kurve beschreiben soll, erforderlich, eine derartige Kurve bzw. den diese Kurve verkörpernden gekrümmten Rohrabschnitt mit einer relativ geringen Krümmung zu versehen, um die stabförmigen Gegenstände nicht zu knicken oder zu beschädigen. Derartig geringe Krümmungen, d.h. große Krümmungsradien haben jedoch einen erheblichen Platzbedarf einer derartigen pneumatischen Förderleitung zur Folge. In heutigen Fabriken ist es jedoch zumeist erforderlich, den Platzbedarf von Maschinen möglichst gering zu halten.

Zur Lösung dieses Problems wurden daher gekrümmte Rohrabschnitte geschaffen, die im Bereich der Krümmung einen erweiterten Durchtrittsquerschnitt aufweisen. Auf diese Weise können relativ kleine Krümmungsradien realisiert werden, ohne die durch die derartig stark gekrümmten Rohrabschnitte hindurchgeförderten stabförmigen Gegenstände zu beschädigen. Ein solcher gekrümmter Rohrabschnitt mit erweitertem Durchtrittsquerschnitt ist beispielsweise aus der DE-OS 21 65 782 bekannt.

Wie weiter oben jedoch bereits erläutert, bedingt der zur schonenden Behandlung erforderliche erweiterte Durchtrittsquerschnitt der gekrümmten Rohrabschnitte einen erhöhten Leckverlust der zum Vorantreiben der Gegenstände verwendeten Luft in diesem Bereich. In diesem Bereich kann die Luft der pneumatischen Förderleitung aufgrund des erweiterten Durchtrittsquerschnittes an dem Gegenstand vorbeiströmen, ohne diesen durch die Krümmung hindurchzutreiben. Somit kann das Fördern eines stabförmigen Gegenstandes durch einen solchen erweiterten Durchtrittsquerschnitt mit Schwierigkeiten verbunden sein, welche sich insbesondere dann bemerkbar machen, wenn der stabförmige Gegenstand entgegen der Schwerkraft, d.h. nach oben gefördert werden soll.

Die Aufgabe der vorliegenden Erfindung ist es daher, die aus dem Stand der Technik bekannten Förderleitungen zu verbessern, um auch bei schwierigen Förderbedingungen in der Förderleitung den Gegenstand problemlos und sicher durch die Förderleitung hindurchfördem zu können.

Diese Aufgabe wird bei einer Förderleitung der eingangs genannten Art erfindungsgemäß durch die Gegenstände der Ansprüche 1 und 6 gelöst.

Durch die erfindungsgemäße zweite Einblasstelle zum Einblasen von zusätzlichem Gas in die Förderleitung wird gewährleistet, dass jegliche Problemstellen in der Förderleitung aufgrund des als zusätzlichen Antrieb für die zu fördernden Gegenstände dienenden zusätzlichen Gases überwunden werden können. So können aufgrund der Erfindung alle Stellen, die beispielsweise aufgrund eines erweiterten Durchtrittsquerschnittes oder aufgrund der Schwerkraft die Förderbedingungen erschweren, problemlos und leicht überwunden werden. Dabei ist es besonders bevorzugt, wenn die zweite Einblasstelle das zusätzliche Gas aus einem gemeinsamen mit der ersten Einblasstelle verwendeten Gasreservoir verwendet. Selbstverständlich ist es dabei besonders bevorzugt, wenn dieses Gasreservoir einfach die Außenluft ist.

Gemäß der Erfindung befindet sich die zweite Einblasstelle zum Einblasen von zusätzlichem Gas in Förderrichtung vor einem gekrümmten Rohrabschnitt der Förderleitung. Somit können alle Schwierigkeiten der Förderung von stabförmigen Gegenständen durch gekrümmte Rohrabschnitte problemlos überwunden werden, in dem direkt vor dem Rohrabschnitt zusätzlich Gas in den gekrümmten Rohrabschnitt eingeblasen wird, um die Leckverluste, die aufgrund eines zumeist in einem solchen gekrümmten Rohrabschnitt verwendeten erweiterten Durchtrittsquerschnitt auftreten, auszugleichen.

Besonders bevorzugt ist es, wenn der gekrümmte Rohrabschnitt eine Richtungsänderung der Förderrichtung von etwa 90° beschreibt. Eine solche Richtungsänderung wird insbesondere beim Fördern der Gegenstände von einer horizontalen in eine vertikale Richtung benötigt.

Eine weitere bevorzugte Ausführungsform zeichnet sich dadurch aus, dass die zweite Einblasstelle ein Ventil aufweist, welches Ventil intervallartig aktivierbar ist, so dass mit Hilfe des Ventils und durch die zweite Einblasstelle zusätzliches Gas zum Fördern der Gegenstände intervallartig in die Förderleitung einblasbar ist. Eine derartige Ausführungsform bietet sich besonders dann an, wenn die Gegenstände in einem festgelegten Intervall durch die Förderleitung gefördert werden. Somit kann mit Hilfe einer geeigneten Steuerung das Einblasintervall der zusätzlichen Luft in die Förderleitung mit dem Förderintervall der in der Förderleitung geförderten Gegenstände synchronisiert werden, so dass die Gegenstände dann, wenn sie an der zweiten Einblasstelle vorbeilaufen, einen zusätzlichen Förderschub erfahren.

Eine weitere bevorzugte Ausführungsform der Erfindung zeichnet sich dadurch aus, dass die zweite Einblasstelle ein Ventil und einen mit dem Ventil derart zusammenarbeitenden Sensor zum Erfassen von Gegenständen in der Förderleitung aufweist, dass das Ventil zum Einblasen von Gas geöffnet wird, wenn der Sensor einen Gegenstand in der Förderleitung erfaßt hat. Diese Ausführungsform ist somit dann besonders zu bevorzugen, wenn das Einblasen der Luft exakt auf das Hindurchtreten eines Gegenstandes durch die Förderleitung abgestimmt werden soll. Somit kann mit Hilfe dieser Ausführungsform eine besonders zielgerichtete Unterstützung der zu fördernden Gegenstände im Bereich direkt stromabwärts der zweiten Einblasstelle sichergestellt werden. Dies ist insbesondere vorteilhaft, da sich stromabwärts von der zweiten Einblasstelle ein gekrümmter Rohrabschnitt mit erweitertem Durchtrittsquerschnitt befindet. Denn dann kann die .zweite Einblasstelle besonders vorteilhaft dazu verwendet werden, die Leckvertuste in dem gekrümmten Rohrabschnitt aufgrund des erweiterten Durchtrittsquerschnittes gezielt auszugleichen, und somit eine durch die gesamte Förderleitung, d.h. durch gradlinige und durch gekrümmte Rohrabschnitte hindurch gleichbleibende Fördergeschwindigkeit der zu fördernden Gegenstände sicherstellen.

Besonders bevorzugt ist es weiterhin, wenn der Innendurchmesser der Förderleitung im Bereich der zweiten Einblasstelle im wesentlichen dem Außendurchmesser der zu fördernden Gegenstände entspricht. Auf diese Weise wird ein maximaler Wirkungsgrad der zweiten Einblasstelle bzw. der an der zweiten Einblasstelle eingeblasenen zusätzlichen Luft erzielt, da bei den genannten Abmessungen im Bereich der zweiten Einblasstelle so gut wie keine Leckverluste durch an den zu fördernden Gegenständen vorbeiströmendes Gas entstehen können.

Weiterhin betrifft die Erfindung ein Verfahren zum Fördern von Gegenständen durch eine Förderleitung mit Hilfe von Gas. Dieses Verfahren zeichnet sich dadurch aus, dass der Gegenstand zunächst mit Hilfe des Gases in der Förderleitung gefördert wird. Darüber hinaus wird in die Förderleitung an einer zweiten Einblasstelle zusätzlich Gas eingeblasen, um die Förderung des Gegenstandes in der Förderleitung gezielt zu verbessern.

In einer bevorzugten Ausführungsform des erfindungsgemäßen Verfahrens wird das Einblasen von Gas insbesondere dann vorgenommen, wenn stromabwärts von der Einblasstelle des Gases schwierige Förderbedingungen in der Förderleitung vorliegen. Solche schwierigen Förderbedingungen können sich insbesondere im Bereich eines gekrümmten Rohrabschnittes der Förderleitung ergeben. Schließlich können solche schwierigen Förderbedingungen weiter insbesondere dadurch entstehen, daß im Bereich eines gekrümmten Rohrabschnittes stromabwärts von der zweiten Einblasstelle ein erweiterter Durchtrittsquerschnitt des gekrümmten Rohrabschnittes vorgesehen ist, um beispielsweise stabförmige Gegenstände im Bereich der Krümmung nicht zu beschädigen.

Weitere bevorzugte Ausführungsformen der Erfindung sind in den Unteransprüchen angegeben.

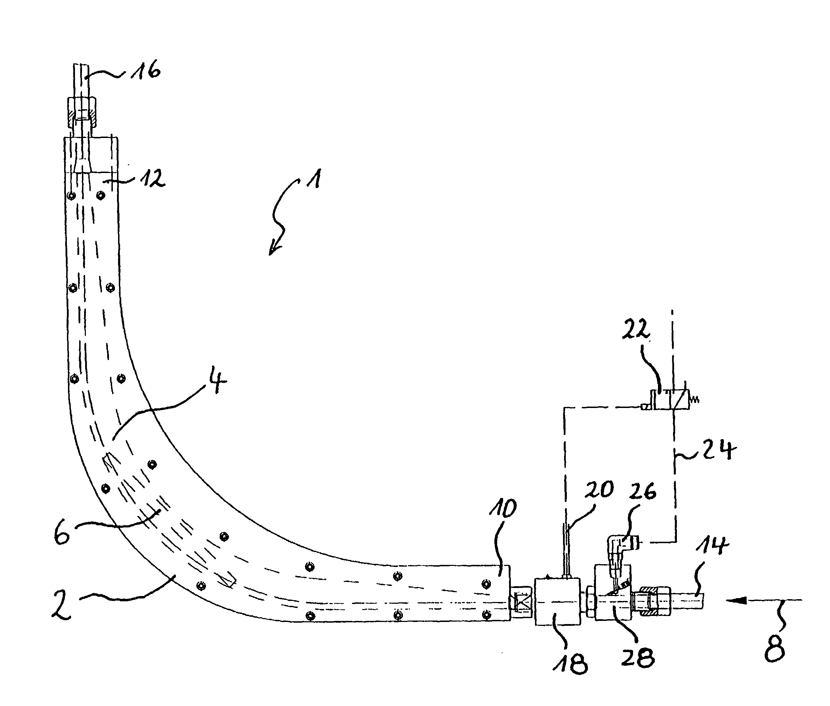

Eine bevorzugte Ausführungsform der Erfindung wird nunmehr mit Bezug auf die Zeichnung erklärt. Die einzige Figur der Zeichnung zeigt eine Ausführungsform einer erfindungsgemäßen Förderleitung mit einem gekrümmten Rohrabschnitt.

Die Figur zeigt eine Ausführungsform einer gekrümmten Förderleitung 1 mit einem gekrümmten Rohrabschnitt 2. Der gekrümmte Rohrabschnitt 2 weist einen erweiterten Durchtrittsquerschnitt 4 auf. Innerhalb des erweiterten Durchtrittsquerschnittes 4 ist mit punktierter Linie schematisch ein in der Förderleitung 1 geförderter Filterstab 6 angedeutet.

Die Förderrichtung der Förderleitung 1 ist durch einen Pfeil 8 symbolisiert. Der erweiterte Durchtrittsquerschnitt 4 des gekrümmten Rohrabschnittes 2 verjüngt sich zu den stromaufwärts 10 und stromabwärts 12 gelegenen Enden des gekrümmten Rohrabschnittes 2 auf den Durchtrittsquerschnitt der geradlinigen stromaufwärts 14 und stromabwärts 16 von dem gekrümmten Rohrabschnitt 2 gelegenen Abschnitte der Förderleitung 1.

Direkt stromaufwärts vor dem gekrümmten Rohrabschnitt 2 befindet sich an der Förderleitung 1 ein Sensor 18. Der Sensor 18 ist über eine teilweise strichpunktiert dargestellte elektrische Leitung 20 mit einer Steuereinheit 22 verbunden. Die Steuereinheit 22 ist über eine ebenfalls strichpunktiert dargestellte Leitung 24 mit einer Ventilsteuerung 26 verbunden. Die Ventilsteuerung steuert ein auf der Förderleitung 1 sitzendes und direkt stromaufwärts vor dem Sensor 18 angeordnetes Ventil 28 zum Einblasen von zusätzlicher Luft in die Förderleitung 1.

Wird ein stabförmiger Filterstab 6 an dem Sensor 18 in Förderrichtung 8 durch die Förderleitung 1 hindurch vorbeigefördert, so erfaßt der Sensor 18, daß der Filterstab 6 an diesem vorbeigefördert wurde. Dieses meldet der Sensor 18 über die elektrische Leitung 20 an die Steuereinrichtung 22 weiter. Die Steuereinrichtung 22 aktiviert dann über die Leitung 24 die Ventilsteuerung 26, um das Ventil 28 zu öffnen, um zusätzliche Luft hinter dem Filterstab 6 in die Förderleitung 1 einzublasen. Auf diese Weise wird der durch den erweiterten Durchtrittsquerschnitt 4 im Bereich des gekrümmten Rohrabschnittes 2 entstehende Leckverlust der Förderluft durch die zusätzlich an dem als Einblasstelle dienenden Ventil 28 eingeblasenen Luft ausgeglichen.

## Patentansprüche

1. Förderleitung zum Fördern von Gegenständen (6) mit Hilfe von Gas, welches durch eine erste Einblasstelle in die Förderleitung (1) einblasbar ist, wobei die Förderleitung (1) einen gekrümmten Rohrabschnitt (2) aufweist, welcher im Bereich der Krümmung einen erweiterten Durchtrittsquerschnitt (4) aufweist,
**gekennzeichnet durch** eine vor dem gekrümmten Rohrabschnitt (2) angeordnete zweite Einblasstelle (28) zum Einblasen von zusätzlichem Gas in die Förderleitung (1), nachdem der Gegenstand (6) die Einblasstelle (28) passiert hat, um die Förderung des Gegenstandes in der Förderleitung zu verbessern.

2. Förderleitung nach Anspruch 1,
wobei der gekrümmte Rohrabschnitt (2) eine Richtungsänderung der Förderleitung (1) von etwa 90° beschreibt.

3. Förderleitung nach einem der vorstehenden Ansprüche,
wobei die zweite Einblasstelle (28) ein Ventil (28) aufweist, so dass die zweite Einblasstelle (28) intervallartig aktivierbar ist.

4. Förderleitung nach einem der vorstehenden Ansprüche,
wobei die zweite Einblasstelle (28) ein Ventil (28) und einen mit dem Ventil (28) derart zusammenarbeitenden Sensor (18) zum Erfassen von Gegenständen (6) in der Förderleitung (1) aufweist, dass das Ventil (28) zum Einblasen geöffnet wird, wenn der Sensor (18) einen Gegenstand (6) in der Förderleitung (1) erfasst hat.

5. Förderleitung nach einem der vorstehenden Ansprüche,
wobei der Innendurchmesser der Förderleitung (1) im Bereich der Einblasstelle (28) im wesentlichen dem Außendurchmesser der geförderten Gegenstände (6) entspricht.

6. Verfahren zum Fördern von Gegenständen (6) durch eine einen gekrümmten Rohrabschnitt (2) aufweisende Förderleitung (1) mit Hilfe von Gas, wobei der gekrümmte Rohrabschnitt (2) im Bereich der Krümmung einen erweiterten Durchtrittsquerschnitt (4) aufweist,
mit den Schritten:
- ein Gegenstand (6) wird mit Hilfe des Gases in der Förderleitung (1) gefördert,
- in die Förderleitung (1) wird an einer Einblasstelle (28) zusätzlich Gas eingeblasen, nachdem der Gegenstand (6) die Einblasstelle (28) passiert hat, um die Förderung des Gegenstandes in der Förderleitung zu verbessern.

## Claims

1. A conveyor conduit for conveying articles (6) by means of gas which can be blown into the conveyor conduit (1) through a first injection location, wherein the conveyor conduit (1) has a curved tube portion (2) which in the region of the curvature has an enlarged passage cross-section (4), **characterised by** a second injection location (28) disposed upstream of the curved tube portion (2) for injecting additional gas into the conveyor conduit (1) after the article (6) has passed the injection location (28) in order to improve conveyance of the article in the conveyor conduit.

2. A conveyor conduit according to claim 1 wherein the curved tube portion (2) describes a change in direction of the conveyor conduit (1) of about 90°.

3. A conveyor conduit according to one of the preceding claims wherein the second injection location (28) has a valve (28) so that the second injection location (28) can be activated in an interval mode.

4. A conveyor conduit according to one of the preceding claims wherein the second injection location (28) has a valve (28) and a sensor (18) for detecting articles (6) in the conveyor conduit (1), the sensor (18) co-operating with the valve (28) in such a way that the valve (28) is opened for injecting gas when the sensor (18) has detected an article (6) in the conveyor conduit (1).

5. A conveyor conduit according to one of the preceding claims wherein the internal diameter of the conveyor conduit (1) in the region of the injection location (28) substantially corresponds to the external diameter of the articles (6) being conveyed.

6. A process for conveying articles (6) through a conveyor conduit (1) having a curved tube portion (2), by means of gas, wherein the curved tube portion (2) in the region of the curvature has an enlarged passage cross-section (4),
comprising the following steps:
- an article (6) is conveyed in the conveyor conduit (1) by means of the gas, and
- gas is additionally blown into the conveyor conduit (1) at an injection location (28) after the article (6) has passed the injection location (28) in order to improve conveyance of the article in the conveyor conduit.

## Revendications

1. Conduit de transport pour assurer le transport d'objets (6) à l'aide de gaz, lequel peut être insufflé dans le conduit de transport (1) au travers d'un premier site d'insufflation, le conduit de transport (1) présentant un tronçon tubulaire incurvé (2) qui, dans la région de la courbure, présente une section de passage élargie (4),
**caractérisé par** un deuxième site d'insufflation (28) disposé en amont du tronçon tubulaire incurvé (2) et destiné à l'insufflation d'un supplément de gaz dans le conduit de transport (1) après que l'objet (6) a franchi le site d'insufflation (28), afin d'améliorer le transport de l'objet dans le conduit de transport.

2. Conduit de transport selon la revendication 1,
dans lequel le tronçon tubulaire incurvé (2) représente un changement de direction d'environ 90° du conduit de transport (1).

3. Conduit de transport selon l'une des revendications précédentes,
dans lequel le deuxième site d'insufflation (28) comprend une soupape (28), de sorte que le deuxième site d'insufflation (28) peut être activé par intermittence.

4. Conduit de transport selon l'une des revendications précédentes,
dans lequel le deuxième site d'insufflation (28) comprend une soupape (28) et un capteur (18) destiné à détecter des objets (6) dans le conduit de transport (1), capteur qui coopère avec la soupape (28) d'une manière telle, que la soupape (28) soit ouverte pour l'insufflation lorsque le capteur (18) a détecté un objet (6) dans le conduit de transport (1).

5. Conduit de transport selon l'une des revendications précédentes,
dans lequel le diamètre intérieur du conduit de transport (1) dans la région du site d'insufflation (28) correspond sensiblement au diamètre extérieur des objets transportés (6).

6. Procédé pour transporter des objets (6) à l'aide de gaz, à travers un conduit de transport (1) présentant un tronçon tubulaire incurvé (2), le tronçon tubulaire incurvé (2) présentant, dans la région de la courbure, une section de passage élargie (4),
procédé comportant les étapes suivantes:
- un objet (6) est transporté à l'aide du gaz dans le conduit de transport (1),
- un supplément de gaz est insufflé dans le conduit de transport (1), au niveau d'un site d'insufflation (28), après que l'objet (6) a franchi le site d'insufflation (28), afin d'améliorer le transport de l'objet dans le conduit de transport.
